# EUROPÄISCHE PATENTANMELDUNG

(11) **EP 3 590 786 A1**
(43) Veröffentlichungstag der Anmeldung: **08.01.2020**
(21) Anmeldenummer: 18181968.1
(22) Anmeldetag: 05.07.2018
(51) Int. Cl.: B61L 19/06, B61L 25/06, B61L 25/08, H04L 9/06, H04L 9/32

(54) **VERFAHREN ZUM SICHEREN AUSTAUSCH UND ZUR SICHEREN ANZEIGE VON ZUSTANDSDATEN VON SICHERHEITSTECHNISCHEN KOMPONENTEN**

(71) Anmelder: Siemens Mobility AG, 8304 Wallisellen (CH)
(72) Erfinder: WEBER, Rolf, 8330 Pfäffikon ZH (CH)
(74) Vertreter: Maier, Daniel Oliver

(57) **Zusammenfassung**

Diese vorliegende Erfindung offenbart ein Verfahren zum sicheren Austausch und zur sicheren Anzeige von Zustandsdaten von sicherheitstechnischen Komponenten, wie Signale, Weichen, Balisen, Loop-Kabel, Gleisstromkreise, Achszähler, in einem Schienennetzwerk zwischen den sicherheitstechnischen Komponenten (S) und Anzeige- und Bediengeräten (BA), umfassend die folgenden Verfahrensschritte:
a) Definieren von Anzeigeelementen (AE) in den Anzeige- und Bediengeräten (BA);
b) Assoziieren der Anzeigeelemente (AE) mit den sicherheitstechnischen Komponenten (S), deren Zustandsdaten für in den Anzeigeelementen (AE) angezeigten Zustände indikativ sind;
c) Einstellen der sicherheitstechnischen Komponenten (S) von einer Stellwerkinstanz (STW) in Abhängigkeit von durch eine Zugdisposition angeforderten Zugfahrten;
d) Auswerten der Zustände der sicherheitstechnischen Komponente (S) auf sich in der Abfolge der angeforderten Zugfahrten etwaig einstellende Veränderungen der Werte der Anzeigeelemente (AE);
e) Abspeichern und Verwalten der den Wechseln zugeordneten Werte für jedes Anzeigeelement (AE) in einer Blockchain (BC); und
f) Ausgeben der in der Blockchain (BC) abgespeicherten Werte der Anzeigeelemente (AE) an zumindest einen Teil der Bedien- und Anzeigegeräte (BA).

Durch den Einsatz der Block Chain Technologie zur Signalisierung und Anzeige von Zuständen einzelner sicherheitstechnischer Komponenten (Gleis, Verschlüsse,...) können auf den Bedien- und Anzeigegeräten immer die aus der Blockchain extrahierten Zustandsdaten angezeigt werden. Jedes Element der Anzeige wird in einer Blockchain verwaltet. Jeder Zustandswechsel wird daher in der Blockchain erfasst und archiviert.

## Beschreibung

Die vorliegende Erfindung bezieht sich auf ein Verfahren zum sicheren Austausch und zur sicheren Anzeige von Zustandsdaten von sicherheitstechnischen Komponenten, wie Signale, Weichen, Balisen, Loop-Kabel, Gleisstromkreise, Achszähler, in einem Schienennetzwerk zwischen den sicherheitstechnischen Komponenten und Anzeige- und Bediengeräten.

Die Steuerung eines Schienennetzwerks ist eine hoch komplexe und hoch sicherheitsrelevante Aufgabe, da eine Gefährdung von Mensch und Material vermieden und zugleich ein flüssiger Zugverkehr erzielt werden muss. Zugfahrten werden in der Regel gemäss einem Fahrplan automatisch aus einem Zugdispositionszentrum heraus bestellt und entsprechend von einem Stellwerk mit der Einstellung und/oder Abfrage der erforderlichen sicherheitstechnischen Komponenten, wie Weichen, Bahnübergänge, Signale, Gleisfreimelder, Achszählsysteme, Balisen usw., bereitgestellt.

Während es bei den klassischen Stellwerken im reinen Sinne zwischen den dezentralen Feldelementen und den zentralen Stellwerkskarten keinen Austausch digitaler Daten gibt, stellt sich diese Situation bei dezentralen Zugsicherungsarchitekturen ganz anders dar. Die den sicherheitstechnischen Komponenten zugeordneten dezentralen Element Controller ermitteln dabei eigenständig Zustandsdaten der von ihnen gesteuerten sicherheitstechnischen Komponenten und übertragen diese als digitalisierte Daten auf einem Datenbus an die jeweils folgende logische Instanz. Diese kann dabei eine zentrale Stellwerkinstanz, aber auch eine Instanz des in logischer Reihenfolge (beispielsweise gemäss Spurplan) folgenden Fahrwegelements sein. Hierbei ist auch nicht prinzipiell nach Daten zur Bearbeitung von Stellwerkaufgaben und Daten zur Bearbeitung von Zugdispositionsaufgaben zu unterscheiden.

Im Zuge der Gewährleistung der erforderlichen signalisierungstechnischen Sicherheit werden erhebliche Anstrengungen unternommen, um für die Mitarbeiter der Zugdisposition Anzeigesysteme für die Einstellungen des Fahrwegs bereitzustellen, die effektiv das wahre Abbild des Zustandes draussen im Gleis beschreiben.

Problematisch ist herbei jedoch, dass sich das an diesen Anzeigesystemen angezeigte Abbild permanent dynamisch mit der Abfolge der Zugfahrten ändert und ein späterer Rückgriff auf die tatsächliche Einstellung der sicherheitstechnischen Komponenten nur noch bedingt möglich ist. Gerade mit dem Auftreten von Störungen oder Unfällen könnte die gesicherte Darstellung von im Zeitpunkt der Störung oder des Unfalls eingestellten Zuständen der Fahrwegelemente wertvolle Aufschlüsse über die Entstehung einer Störung oder eines Unfalls geben.

In den vorstehend beschriebenen Systemen mit dezentraler Stellwerkarchitektur werden die zwischen einer Stellwerkinstanz und den dezentralen Element Controllern ausgetauschten Zugsicherungsdaten nach einem bestimmten Datenmodell über Datenbusse übertragen. Dabei folgt die Kodierung der Daten gewissen in dem Datenmodell bestimmten Mustern, sodass übertragene Daten bei dem jeweiligen Empfänger auch auf deren Authentizität geprüft werden können. Dabei kann es vorgesehen sein, dass beim Empfänger eine Art elektronisches Logbuch geführt wird, in dem der Datenverkehr zu Sicherungszwecken aufgezeichnet wird. Dennoch ist es möglich, dass auch diese Daten später noch verändert oder auch fehlerhaft abgespeichert werden.

Zustände und Informationen innerhalb sicherungstechnischer Anlagen (Bahntechnik) müssen aber unverfälscht sein, beziehungsweise dürfen nicht unerlaubt verändert werden. Weiterhin muss zwischen den teilnehmenden Systemen Einigkeit herrschen, welcher Zustand für eine sicherheitstechnische Komponente aktuell gültig ist. Die Erfindung soll dazu genutzt werden, dass zum Beispiel zwischen einem / mehreren mobilen Bedien- und Anzeige-Geräten sowie dem zugrundeliegenden System, wie z.B. dem Leitsystem oder der Stellwerkinstanz, Einigkeit über die aktuellen Zustände herrscht und damit Vertrauen in die angezeigten Zustände entsteht.

Aktuell werden die angezeigten Zustände der sicherheitstechnischen Komponenten von einem zentralen System ermittelt und beispielsweise an mobile Bedien- und Anzeigegeräte übertragen. Der erforderliche Sicherheitslevel wird aktuell erreicht, in dem die Übertragung der Zustandsdaten selbst überwacht wird. Im Idealfall sind Sender und Empfänger der Nachrichten zweikanalig aufgebaut, um Übertragungsfehler sicher erkennen zu können.

Die Aufgabe der Erfindung liegt nun darin einen Weg anzugeben, wie die Zustände der durch Zugsicherungsinstanzen, wie Stellwerk und Disposition, angeforderten und entsprechend der Anforderung als eingestellt rückgemeldeten Zugsicherungsdaten sicher übertragen und angezeigt werden können, ohne dass diese Zugsicherungsdaten zu einem späteren Zeitpunkt nicht mehr als sicher gelten könnten.

Diese Aufgabe wird erfindungsgemäss durch ein Verfahren zum sicheren Austausch und zur sicheren Anzeige von Zustandsdaten von sicherheitstechnischen Komponenten, wie Signale, Weichen, Balisen, Loop-Kabel, Gleisstromkreise, Achszähler, in einem Schienennetzwerk zwischen den sicherheitstechnischen Komponenten und Anzeige- und Bediengeräten gelöst, umfassend die folgenden Verfahrensschritte:
a) Definieren von Anzeigeelementen in den Anzeige- und Bediengeräten;
b) Assoziieren der Anzeigeelemente mit den sicherheitstechnischen Komponenten, deren Zustandsdaten für in den Anzeigeelementen angezeigten Zustände indikativ sind;
c) Einstellen der sicherheitstechnischen Komponenten von einer Stellwerkinstanz in Abhängigkeit von durch eine Zugdisposition angeforderte Zugfahrten;
d) Auswerten der Zustände der sicherheitstechnischen Komponente auf sich in der Abfolge der angeforderten Zugfahrten etwaig einstellende Veränderungen der Werte der Anzeigeelemente;
e) Abspeichern und Verwalten der den Wechseln zugeordneten Werte für jedes Anzeigeelement in einer Blockchain; und
f) Ausgeben der in der Blockchain abgespeicherten Werte der Anzeigeelemente an zumindest einen Teil der Anzeige- und Bediengeräte.

Durch den Einsatz der Block Chain Technologie zur Signalisierung und Anzeige von Zuständen einzelner sicherheitstechnischer Komponenten (Gleis, Verschlüsse,...) können auf den Bedien- und Anzeigegeräten immer die aus der Blockchain extrahierten Zustandsdaten angezeigt werden. Jedes Element der Anzeige wird in einer Blockchain verwaltet. Jeder Zustandswechsel wird daher in der Blockchain erfasst und archiviert. Als Beispiel kann der Zustand eines Gleises angenommen werden. Ein Gleis in einem Bahnhof, oder auf der Strecke, kann "Frei", oder "Belegt" sein. Wird der Zustand dieses Gleises in einer Blockchain verwaltet, dann wird zwischen allen beteiligten Rechnern der aktuelle Zustand abgeglichen und kann damit kontrolliert werden. Es existiert ein Konsens über den Zustand, eine falsche Anzeige kann durch den damit möglichen Abgleich verhindert werden. Ein mobiles Bediengerät kann mit den beteiligten anderen Rechnern den aktuellen Zustand des Elementes abgleichen.

In besonders vorteilhafter Weise können die Anzeige- und Bediengeräte mobile Geräte sein. Auf diese Weise besteht einerseits die Möglichkeit sich in einem Zugdispositionszentrum von Arbeitsplatz zu Arbeitsplatz bewegen zu können und/oder anderseits auch für Personen an der Gleisanlage zuverlässig die für die Anzeigeelemente erforderlichen Daten geliefert zu bekommen.

Die Erfindung wird nachfolgend anhand der Zeichnung beispielsweise näher erläutert. Dabei zeigen:
- Figur 1: schematisch den Aufbau einer Einrichtung zur Steuerung und/oder Überwachung von entlang eines Eisenbahnnetzwerkes (hier nicht weiter dargestellt) angeordneten dezentralen Funktionseinheiten;
- Figur 2: schematisch eine Struktur der Inhalte von Knoten einer Blockchain; und
- Figur 3: eine Prinzipdarstellung des Zugriffs auf eine Blockchain und der Datenkonsumenten und der Datenproduzenten.

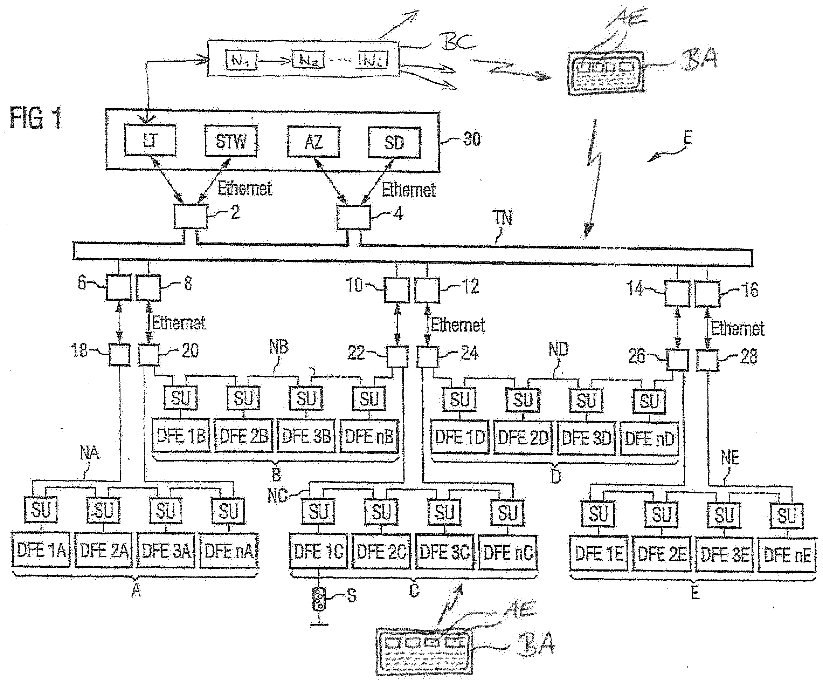

Figur 1 zeigt in schematischer Ansicht den Aufbau einer Einrichtung E zur Steuerung und/oder Überwachung von entlang eines Eisenbahnnetzwerkes (hier nicht weiter dargestellt) angeordneten dezentralen Funktionseinheiten DFE1A bis DFEnA, DFE1B bis DFEnB usw. (im Nachfolgenden auch Element Controller EC genannt). Sollte nicht eine bestimmte Funktionseinheit gemeint sein, werden die dezentralen Funktionseinheiten nachfolgend mit DFE oder EC bezeichnet. Derartige dezentrale Funktionseinheiten DFE werden genutzt, um zugbeeinflussenden und/oder zugüberwachende Einheiten (u.a. auch Fahrbahnelemente genannt) zu steuern und zu überwachen. Als zugbeeinflussende Einheiten können beispielsweise Signale, Weichen, Balisen, Linienleiter, Gleismagnete und dergleichen genannt werden. Als zugüberwachende Einheiten können ebenfalls Balisen und Linienleiter, aber auch Achszähler und Gleisstromkreise genannt werden. Beispielhaft wird durch die dezentrale Funktionseinheit DFE1C ein Signal S gesteuert und überwacht. Die dezentrale Funktionseinheit DFE 1C steuert dabei die Anzeige der Signalbegriffe und führt respektive assistiert bei Überwachungsfunktionen, wie beispielsweise der Überwachung des Lampenstroms im Signalstromkreis.

Jede dezentrale Funktionseinheit DFE respektive die von gesteuerte/überwachte Einheit verfügt im gesamten Netzwerk über eine eindeutige Adresse, beispielsweise eine IP-Adresse oder eine MAC-Adresse.

Die Einrichtung E umfasst weiter ein Datentransportnetzwerk TN mit einer Anzahl von Netzzugangspunkten 2 bis 16. An einem Teil dieser Netzzugangspunkte 6 bis 16 sind Kommunikationseinheiten 18 bis 28 angeschlossen. Das Datentransportnetzwerk TN ist hierbei als hochverfügbares Netzwerk ausgestaltet. Solche hochverfügbaren Strukturen können sich einerseits durch eine redundante Ausführung des Netzes selbst und/oder andererseits durch eine geschickte Re-Organisation des Netzes beim Ausfall eines Verbindungsstückes ergeben.

Ausserdem umfasst die Einrichtung E ein übergeordnetes Steuerungssystem 30, das neben anderen hier nicht weiter aufgeführten Komponenten eine Leitstelle LT für die Zugdisposition, eine Stellwerkinstanz STW, einen Achszählrechner AZ und eine Service/Diagnose-Einheit SD umfasst, die über die Netzzugangspunkte 2 und 4 mittels Ethernet-Verbindungen an das Datentransportnetzwerk TN angeschlossen sind. Alle vorstehend genannten Bestandteile des übergeordneten Steuerungssystems 30 zeichnen sich auch dadurch aus, dass hier sowohl stationäre Anzeige- und Bediengeräte als auch mobile Bedien- und Anzeigegeräte BA in den vielfältigsten Aufgaben zum Einsatz kommen können. Dabei sind die mobilen Bedien- und Anzeigegeräte BA, wie z.B. Tablet-PCs, PDAs und Smart Phones, über entsprechende Funkschnittstellen (Router) mit dem Transportnetzwerk TN und/oder den Ethernet-Verbindungen in dem übergeordneten Steuerungssystem 30 bidirektional verbunden (nicht im Detail dargestellt).

Wie in der Figur 1 gezeigt, müssen die dezentralen Funktionseinheiten DFE über eine der Kommunikationsgruppen 18 bis 28 und den entsprechende Netzwerkknoten 6 bis 16 an dem Transportnetzwerk TN angekoppelt sein und können so über dieses Datentelegramme erhalten oder austauschen. Die dezentralen Funktionseinheiten DFE sind dabei zu Untergruppen A, B, C, D und E mit jeweils eigenem Subnetzwerk NA, NB, NC, ND und NE zusammengefasst. Die Untergruppe A wird beispielsweise aus den dezentralen Funktionseinheiten DFE1A, DFE2A, DFE3A bis DFEnA gebildet. Dabei sind die Untergruppen A bis E immer an ihren beiden Enden mit je einer der Kommunikationsgruppen 18 bis 28 und einem Netzzugangspunkten 6 bis 16 verbunden. Jeder dezentralen Funktionseinheit DFE ist zudem ein Vermittlungsrechner SU oder SCU, der alternativ auch direkt in die dezentrale Funktionseinheit DFE integriert sein kann, vorgeschaltet, welcher für die dezentralen Funktionseinheiten DFE den Anschluss an das Subnetzwerk bereitstellt, damit jede dezentrale Funktionseinheit DFE beim Ausfall einer Kommunikationsgruppe noch von einer zweiten redundanten Kommunikationsgruppe 18 bis 28 angesprochen werden kann.

Jedes Subnetzwerk (NA bis NE) ist somit aus einer Anzahl von Punkt-zu-Punkt-Verbindungen von logisch benachbarten dezentralen Funktionseinheiten (DFE) aufgebaut. Dabei ist eine Punkt-zu-Punkt-Verbindung als autonome Übertragungsstrecke innerhalb des Subnetzwerks ausgebildet, zum Beispiel als ISDN-Übertragungsstrecke oder als xDSL-Übertragungsstrecke oder LWL-Übertragungsstrecke. Somit kann ein einzelnes Subnetzwerk sozusagen aus einzelnen Übertragungszellen aufgebaut werden, die ihrerseits jeweils immer nur die Übertragung von Punkt zu Punkt beherrschen müssen. Mit anderen Worten gesprochen können so beispielsweise aus einfachen, eher kurzreichweitigen Übertragungstechniken auch ein viel längeres und komplexeres Subnetzwerk zusammengesetzt werden. Aus diesem Grund ist es zweckmässig, die Punkt-zu-Punkt-Verbindung an jedem Ende mit einem Vermittlungsmodul (SU) zu terminieren, wodurch sich sogar die Chance ergibt, die Punkt-zu-Punkt-Übertragungstechnik von Zelle zu Zelle zu ändern und so die jeweils geeigneteste Übertragungstechnik auswählen zu können. Ein geeignetes Vermittlungsmodul (SU) kann hierzu so ausgestaltet sein, dass es eine Anzahl von Punkt-zu-Punkt-Übertragungstechniken bereitstellt und in Abhängigkeit von der Beschaltung selbstorganisierend die durch die Beschaltung bestimmte Punkt-zu-Punkt-Übertragungstechnik bereitstellt.

Ist nun durch die Leitstelle LT eine Zugfahrt für einen mittels einer Zugnummer eindeutig identifizierbaren Zug angefordert, erfordert dies, dass sich die Fahrbahnelemente, wie Weichen und Signale, in dem für diese Zugfahrt erforderlichen Einstellzustand befinden. So müssen beispielsweise die Weichen und die Signale entsprechend eingestellt und/oder im Gleis liegende Balisen zur Abstrahlung entsprechender vom Fahrzeugrechner interpretierbarer Telegramme eingestellt und/oder bei Übertragung mit GSM-R entsprechend das Radio Block Center (RBC) zur Aussendung entsprechender Datensignale/Telegramme eingerichtet sein.

Bei der Vielzahl um Umfeld der sicherheitstechnischen Aufgaben eingesetzten Bedien- und Anzeigegeräte BA ist es daher besonders bedeutsam, dass die in den Anzeigeelementen AE angezeigten Zustände, zum Beispiel der Gleise eines Bahnhofs, auch der tatsächlichen Ist-Situation im Zeitpunkt ihrer Anzeige entsprechen. Deshalb ist an dieser Stelle ein Verfahren zum sicheren Austausch und zur sicheren Anzeige von Zustandsdaten von sicherheitstechnischen Komponenten, wie Signale, Weichen, Balisen, Loop-Kabel, Gleisstromkreise, Achszähler, in einem Schienennetzwerk zwischen den sicherheitstechnischen Komponenten und Anzeige- und Bediengeräten BA vorgesehen, das im Wesentlichen die folgenden Verfahrensschritte umfasst:
a) Im Zuge der Definition der sicherheitstechnischen Aufgaben werden auch die Anzeigeelemente AE definiert, die in den Anzeige- und Bediengeräten BA zur Anzeige gebracht werden und den Nutzern verlässliche Informationen über den Zustand der Gleisanlage inkl. deren Belegung durch Zugfahrten dynamisch liefern sollen.
b) Da beispielsweise die Anzeige des Zustands eines Gleises die Auswertung von mehreren Zustandsdaten von sicherheitstechnischen Komponenten (z.B. Weichenposition und deren Verschluss, Flankenschutz, Signalbegriff, Gleisfreimeldung usw.) erfordern kann, sind die Anzeigeelemente AE mit dem oder den sicherheitstechnischen Komponenten zu assoziieren, deren Zustandsdaten für in den Anzeigeelementen AE angezeigten Zustände indikativ sind.
c) Unabhängig davon, ob der Zugverkehr in einem automatischen Modus nach vorliegendem Fahrplan abgewickelt werden kann oder ob einzelne Zugfahrten manuell auf der Dispositionsebene (beispielsweise von der Fahrdienstleitung) einzustellen sind, müssen die sicherheitstechnischen Komponenten von der Stellwerkinstanz STW in Abhängigkeit von durch die Zugdisposition angeforderten Zugfahrten eingestellt werden. Erst nach einer sicheren Rückmeldung der angeforderten Einstellzustände kann dann der Fahrtbegriff signalisiert werden, beispielsweise durch Anzeige des entsprechenden Signallichts und/oder durch Übertragung eines Datentelegramms von einer gleisseitig angeordneten Balise in den Führerstand einer Lokomotive oder eines Steuerwagens und/oder durch Übertragung eines Datentelegramms via GSM-R von einem RBC an den Führerstand einer Lokomotive oder eines Steuerwagens.
d) Während dieser gesamten Einstellvorgänge werden die Zustände der sicherheitstechnischen Komponente ständig auf sich in der Abfolge der angeforderten Zugfahrten etwaig einstellende Veränderungen der Werte W der Anzeigeelemente AE ausgewertet.
e) Kommt es nun tatsächlich zu einer Veränderung eines Wertes W für ein Anzeigeelement AE, werden die den Wechseln zugeordneten Werte W für jedes Anzeigeelement AE in einer Blockchain BC abgespeichert und verwaltet. Mit anderen Worten heisst dies, dass jede Änderung des in dem Anzeigeelement AE anzuzeigenden Zustand eine neue Transaktion Ti darstellt, die gemäss der Blockchain-Algorithmen mit einer Prüfsumme versehen verschlüsselt in der Blockchain BC abgespeichert wird.
f) In Antwort auf eine Veränderung eines Wertes W für ein Anzeigeelement AE werden dann die in der Blockchain BC abgespeicherten Werte der Anzeigeelemente AE an zumindest einen Teil (in der Regel wahrscheinlich an alle beteiligten) der Bedien- und Anzeigegeräte BA ausgegeben. Dort kann der Inhalt der Blockchain BC anhand der entsprechenden Entschlüsselung unter Überprüfung der Prüfsumme rekonstruiert und der aktuelle Wert W für das Anzeigeelement AE angezeigt werden, z.B. Zustände, wie Gleis frei, Weichenlage links, Flankenschutz durch Verriegelung der Weiche eines Nachbargleises erzielt und dergleichen.

Durch den Einsatz der Block Chain Technologie zur Signalisierung und Anzeige von Zuständen einzelner sicherheitstechnischer Komponenten (Gleis, Verschlüsse,...) können auf den Bedien- und Anzeigegeräten BA immer die aus der Blockchain BC extrahierten Zustandsdaten angezeigt werden. Jedes Anzeigeelement AE wird in einer eigenen Blockchain BC verwaltet. Jeder Zustandswechsel wird daher in der Blockchain BC erfasst und archiviert. Es existiert daher unter allen Teilnehmern der Blockchain BC ein Konsens über den Zustand des Anzeigeelements AE; folglich kann eine falsche Anzeige durch den damit möglichen Abgleich verhindert werden. Somit kann ein mobiles Bedien-und Anzeigegerät BA mit den beteiligten anderen Rechnern/Bediengeräten den aktuellen Zustand des Anzeigeelementes AE abgleichen.

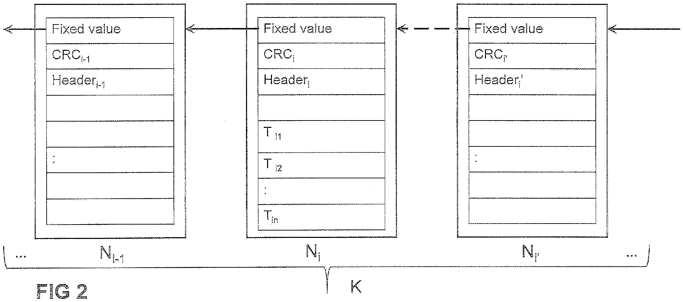

Durch den Austausch der Informationen zwischen den beteiligten Rechnern, z.B. Rechner der Stellwerkinstanz STW, Rechner der Leitstellt LT, und dem Blockchain-Algorithmus kann eine einkanalige Architektur für die mobilen Bedien- und Anzeigegeräte BA eingesetzt werden. Die Sicherheit über die korrekte Information wird durch die digitale Signatur des entsprechenden Blockes N (siehe Figur 2) der Blockchain BC erreicht.

Aufgrund der Archivierung der Werte für die Anzeigeelemente AE innerhalb der Blockchain BC kann auch das Thema Diagnose und Log-File gleichzeitig gelöst werden. Alle Zustandswechsel werden in der Blockchain BC archiviert und stehen damit zur Diagnose zur Verfügung (nachträglich, als auch zeitgleich).

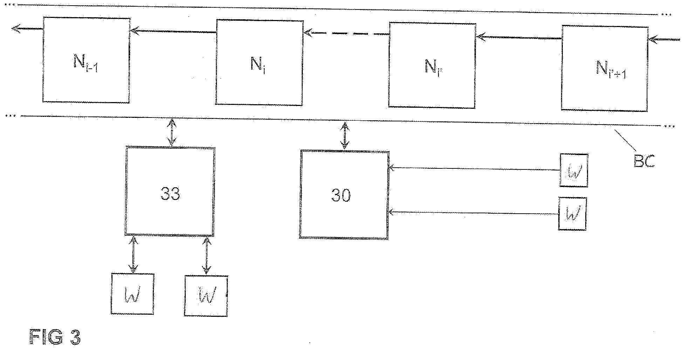

Figur 3 zeigt in einer vereinfachten Übersicht die involvierten funktionalen und statischen Komponenten zur Computerimplementierung des erfindungsgemässen Verfahrens. Die Blockchain BC ist als verteiltes Datenbanksystem realisiert, bei dem die einzelnen Blöcke Nᵢ durch Pointer miteinander verlinkt sind. Verteilt heisst hier insbesondere, dass die einzelnen Blöcke Nᵢ, Nᵢ₊₁ ... keine bestimmte geographische Zuordnung oder eine Zuordnung zu einem bestimmten Server aufweisen. Die Integrität der Blöcke Nᵢ ist durch einen Hashwert - (ebenfalls im betreffenden Block Nᵢ abgelegt) gewährleistet. Der hierzu verwendete Hash-Algorithmus wandelt dabei die Werte für die Anzeigeelemente in einen Hashwert um. Daher führen nur absolut identische Daten auch wieder zu demselben Hashwert, wodurch die zu prüfende Zeichenkette stets auf ihre Authentizität überprüft werden kann. Der Zugriff zur Speicherung der Werte W in den Blöcken Nᵢ, N_{i'}, ... erfolgt über ein sogenanntes Orakel 30. Im vorliegenden Fall ist die Leitstelle LT mit dem Orakel 30 verbunden. In einer konkreten Ausführung der vorliegenden Erfindung werden die von der Leitstelle LT erfassten Werte, die beispielsweise von der Stellwerkinstanz STW generiert worden sind, wo notwendig zusammengefasst und die Werte W für die Anzeigeelemente bestimmt. Bei einer Änderung werden die betreffenden Werte W für das entsprechende Anzeigeelement zur Speicherung in der zugehörigen Blockchain BC bestimmt und dem Orakel 30 zur Ablage in einem Block Nᵢ der Blockchain BC übermittelt. Für das Rücklesen der in den Blöcken der Blockchain BC gespeicherten Daten können sogenannte Wallets 33 verwendet werden, über die auch Abrechnungsvorgänge nach zuvor definierten Smart Contracts zum Beispiel zur Verrechnung von Streckennutzungsgebühren abgewickelt werden können.

Fig. 2 zeigt die prinzipielle Struktur der Knoten Nᵢ der Blockchain B. Mit CRC ist ein Hashwert über den ganzen Knoten Nᵢ zur Sicherung der Authentizität des betreffenden Knotens bezeichnet. Im Headerᵢ ist die Struktur und Grösse des betreffenden Knotens Nᵢ festgelegt. Die Transaktion Ti₁, Ti₂, beinhalten die einzelnen Werte für die Anzeigeelemente und gegebenfalls zusätzliche bei den Einstellvorgängen erfasste Daten wie Zeitstempel und dergleichen.

## Patentansprüche

1. Verfahren zum sicheren Austausch und zur sicheren Anzeige von Zustandsdaten von sicherheitstechnischen Komponenten, wie Signale, Weichen, Balisen, Loop-Kabel, Gleisstromkreise, Achszähler, in einem Schienennetzwerk zwischen den sicherheitstechnischen Komponenten (S) und Anzeige- und Bediengeräten (BA), umfassend die folgenden Verfahrensschritte:
a) Definieren von Anzeigeelementen (AE) in den Anzeige- und Bediengeräten (BA);
b) Assoziieren der Anzeigeelemente (AE) mit den sicherheitstechnischen Komponenten (S), deren Zustandsdaten für in den Anzeigeelementen (AE) angezeigten Zustände indikativ sind;
c) Einstellen der sicherheitstechnischen Komponenten (S) von einer Stellwerkinstanz (STW) in Abhängigkeit von durch eine Zugdisposition angeforderten Zugfahrten;
d) Auswerten der Zustände der sicherheitstechnischen Komponente (S) auf sich in der Abfolge der angeforderten Zugfahrten etwaig einstellende Veränderungen der Werte (W) der Anzeigeelemente (AE);
e) Abspeichern und Verwalten der den Wechseln zugeordneten Werte (W) für jedes Anzeigeelement (AE) in einer Blockchain (BC); und
f) Ausgeben der in der Blockchain (BC) abgespeicherten Werte (W) der Anzeigeelemente (AE) an zumindest einen Teil der Bedien- und Anzeigegeräte (BA).

2. Verfahren nach Anspruch 1,
**dadurch gekennzeichnet, dass**
die Anzeige- und Bediengeräte (BA) mobile Geräte sind.
